# EUROPEAN PATENT SPECIFICATION

(11) **EP 3 303 529 B1**
(45) Date of publication and mention of the grant of the patent: **24.02.2021**
(21) Application number: 16733756.7
(22) Date of filing: 01.06.2016
(51) Int. Cl.: C11B 1/00, C11B 1/04, A23J 1/14, A23J 3/14, B07B 1/00, A23K 10/30, A23K 20/147, A23L 11/00, A23K 50/30, A23K 50/75

(54) **OILSEED MEAL**
ÖLSAATGERICHT
FARINE DE GRAINES OLÉAGINEUSES

(30) Priority: 03.06.2015 EP 15170397
(43) Date of publication of application: 11.04.2018
(73) Proprietor: Cargill, Incorporated, Wayzata, MN 55391 (US)
(72) Inventor: MOSTAFA, Yasser, 44550 Montoir de Bretagne (FR); MURRU, Marcello, 1030 Bruxelles (BE)
(74) Representative: Elseviers, Myriam
(86) International application number: PCT/US2016/035242
(87) International publication number: WO 2016/196617

(56) References cited:
- WO-A1-2004/112493
- WO-A1-2014/037564
- RU-C1- 2 467 589
- US-A1- 2002 081 365
- Heinz-Peter Sauer: "Der Mogensen Sizer in der 4. Generation - The 4th Generation Mogensen Sizers", Internet , 1 January 2001 (2001-01-01), XP055225898, Retrieved from the Internet: URL:http://www.mogensen.de/en/pdf/345-348. pdf [retrieved on 2015-11-05]
- Anon: "POST HARVEST AND AGRO PROCESSING", , 1 January 2005 (2005-01-01), XP55614168, Retrieved from the Internet: URL:https://farmer.gov.in/dacdivision/Mach inery1/chap6a.pdf [retrieved on 2019-08-20]

## Description

### Cross-Reference to Related Applications

This application claims the benefit of European Patent Application Serial No. 15170397.2 filed June 03, 2015, entitled "OILSEED MEAL".

### Field of the Invention

The present invention relates to a process for preparing an oilseed meal with enriched content of proteins and the use of a frame with classifying element or multiple frames with multiple classifying elements and wherein the classifying elements have rectangular or elliptical holes and wherein the classifying element is inclined downwards in the frame in an angle of from 5° to 45° from horizontal position, preferably from 10° to 40° from horizontal position.

### Background of the Invention

Oilseeds generally contain a significant amount of proteins. For example, rapeseed meal or canola meal contains 35-40% proteins. From the standpoint of animal nutrition, the protein components in animal feed should be selected in accordance with physiological nutrition guidelines and an increased protein content is preferably used.

In fact, for monogastric animals, such as pigs and poultry, the protein content is important in terms of digestibility and nutrient concentration.

Efforts were therefore undertaken in the industry to devise ways for increasing the amount of proteins in oilseeds.

EP 1 908 355 relates to processes for the reduction of the fiber content in oilseeds.

EP 2 123 178 describes a method for producing a rapeseed meal, and more particularly to a method for producing a rapeseed meal having high industrial usefulness

US2002/0081365 is a method for production of germ-enriched soybean material using sieves with rectangular holes.

It would be desirable to have an effective process for obtaining protein-containing oilseeds with suitable protein content.

The current invention provides such a process.

### Summary of the Invention

The current invention relates to a process for preparing an oilseed meal with enriched content of proteins by sieving original oilseed meal resulting from the extraction of oil, characterized in that the sieving is using a first frame with first classifying element in the form of screen cloths, wires, or bars and wherein the classifying element has rectangular holes, and wherein the frame including the first classifying element is shaking, oscillating, vibrating or tumbling, or wherein the classifying element is oscillating, or vibrating within the frame, and wherein the classifying element is inclined downwards in the frame in an angle of from 5° to 45° from horizontal position, preferably from 10° to 40° from horizontal position. and is according to claim 1.

It further relates to the use according to the claim 9, of a frame containing one or multiple shaking, oscillating, vibrating or tumbling, classifying elements in the form of screen cloths, wires, or bars and wherein the classifying elements have rectangular, or elliptical holes for enriching the protein content in oilseed meal with at least 3%, preferably from 4% up to 12% in comparison with original oilseed meal. The classifying element is inclined downwards in the frame in an angle of from 5° to 45° from horizontal position, preferably from 10° to 40° from horizontal position.

### Detailed Description

The current invention relates to a process for preparing an oilseed meal with enriched content of proteins by sieving original oilseed meal residue resulting from the extraction of oil, characterized in that the sieving is using a first frame with first classifying element in the form of screen cloths, wires, or bars and wherein the classifying element has rectangular holes, and wherein the frame including the classifying element is shaking, oscillating, vibrating or tumbling, or wherein the classifying element is oscillating, or vibrating within the frame, and according to claim 1.

The process of the current invention can be performed in batch. Alternatively it can be continuous in operation.

The oilseed meal is selected from the group consisting of rapeseed, sunflower, sesame, mustard, soybean, corn germ, flaxseed, and mixtures thereof, preferably rapeseed or sunflower, more preferably rapeseed.

In the present invention, rapeseed and canola are used interchangeable.

The oilseed meal is a product obtained from pressing and solvent extraction of oilseeds, except for soybeans that are not pressed before oil extraction. This oilseed meal is rather greasy and the meal has a tendency to agglomerate. Moreover usually gums from the degumming step are added to the meal before discharging the original oilseed meal. The gums further contribute to the greasiness and tendency of agglomeration of the oilseed meal. The original oilseed meal is the product directly obtained from pressing and solvent extraction of oil from oilseeds. In this process, the solvent extraction is a general term that also includes desolventizing, toasting. Optionally the meal is further dried. Alternatively, the original oilseed is the product obtained from pressing and solvent extraction of oil from oilseeds and combined with gums from the degumming step. Again, this combination with gums can be done during the solvent extraction, e.g. before desolventizing and toasting or during toasting of the meal. The desolventizing and toasting of the meal is well-known in the art, and it involves the solvent flashing from the meal by heating it on a series of steam-heated plates. The final stripping of the solvent is completed by injecting steam through the meal, a process called toasting. The optional drying of the meal is well-known in the art. This process for obtaining the original oilseed meal is in particular applied where the oilseed is rapeseed.

The original oilseed meal is sieved by using a first frame with first classifying element in the form of screen cloths, wires, or bars and wherein the classifying element has rectangular holes, and wherein the frame including the classifying element is shaking, oscillating, vibrating or tumbling, or wherein the classifying element is oscillating, or vibrating within the frame.

The frame of the present invention is the set-up which is holding, containing the classifying element or multiple elements. The frame in the current invention may hold one classifying element, preferably is holding two, three, four, five, six or more classifying elements.

The classifying element of the present invention is selected as such that the holes can be characterized by two distinct or different dimensions. Specific examples of such types of holes are rectangular holes. In a typical example, the one dimension is equal to three times the other dimension (e.g. length = 3x width).

The sieving is further characterized in that the frame (including the classifying element) is making an agitating movement. The agitation is not to be understood in a limiting definition but it can be represented as shaking, oscillating, vibrating or tumbling. A combination of any of these movements is likewise applicable.

In yet another aspect of the invention, only the classifying element is oscillating, or vibrating. In this aspect of the invention, the frame which is comprising the classifying element remains static and the classifying element is oscillating, or vibrating.

In yet another aspect of the invention, the sieving of the present invention is using a frame comprising 2 to 6 superimposed classifying elements each inclined downwards in the frame in an angle from 5 to 45° from horizontal position and the classifying element is inclined in an angle of from -5° to 20° related to the previous classifying element in the frame, while the classifying elements are vibrating or oscillating, preferably vibrating.

Shaking of the frame is causing the frame to move from side to side or up and down with rough movements.

Oscillation is the movement of the frame or classifying element from its resting place to the maximum distance it can cover on one side to the maximum distance on the other side and back to its resting place. The maximum distance is also called the amplitude. The resting point is known as the equilibrium state. Oscillation has a definite time period and it is known as a periodic movement and the time taken to complete one oscillation is its frequency. It is a swinging back and forth with a steady, uninterrupted rhythm.

Vibration is the movement of the frame or the classifying element about its mean position and it can be linear, circular, periodic or non-periodic.

Tumbling of the frame represents rolling or moving end over end.

The process of the present invention comprising the following steps:
a) Sieving original oilseed meal resulting from the extraction of oil onto a first classifying element of a first frame wherein the classifying element is in the form of screen cloths, wires, or bars and is having rectangular holes, and
b) Further sieving the oilseed meal coming through the first classifying element by applying another classifying element,
c) Repeating step b), preferably once, preferably twice or more preferably three times, even more preferably four times or more,
d) Collecting the oilseed meal coming through as the oilseed meal with enriched content of proteins, and
   Characterized in that the frame including the classifying element is shaking, oscillating, vibrating or tumbling, or wherein the classifying element is oscillating, or vibrating within the frame.

The process of the present invention is further characterized in that in step b) a classifying element is used wherein the holes are in surface smaller than the surface of the holes of the classifying element applied in the preceding step.

The current invention relates to the process wherein the classifying element is inclined downwards in an angle of from 5° to 45° from horizontal position, preferably from 10° to 40° from horizontal position, according to claim 1. Other angles are suitable as well, such as from 15° to 30°, from 17° to 25° or 18° to 20°. Further suitable angles are 21°, 23°, 26° and 32°.

Furthermore, the current invention relates to the process that comprises the following steps:
a) Placing the original oilseed meal resulting from the extraction of oil onto the first classifying element of the first frame,
b) Further sieving the oilseed meal coming through the first classifying element by applying another classifying element wherein the holes are in surface smaller than the surface of the holes of the classifying element applied in the preceding step,
c) Optionally repeating step b), preferably once, preferably twice or more preferably three times,
d) Collecting the oilseed meal coming through as the oilseed meal with enriched content of proteins.

The repeating step c) of the present invention is not limited to three times but more than three times are applicable as well. In fact, repetition of up to ten times can be applied.

The oilseed meal that is collected in step d) of the process is the product that is passing through the classifying element. Occasionally, the collected oilseed meal is the sum of the product that is passing through the last two (fine) classifying elements.

This process is in particular suitable wherein the oilseed meal is rapeseed meal. In a preferred aspect of the invention, the surface of the holes of the another classifying element is 1.05 to 15 times smaller than the surface of any of the preceding classifying element. More preferably the surface is 1.5, 2.0, 3.0, 5.0, 7.0, 10.0, 12.0 times smaller.

Further, the current invention relates to the process wherein the another classifying element of step b) or optionally from step c) is inclined in an angle of from - 5° to 20° related to the first classifying element. The angle between the classifying elements is typically between 0-10°.

The current invention relates to the process wherein the oilseed meal is sieved onto another first classifying element of another frame. In fact, the process of the current invention may involve applying the oilseed meal onto the first classifying element or multiple elements of multiple frames, whereby multiple can be two, three, four or more.

The current invention relates to the process wherein it comprises further sieving the oilseed meal, exiting the first frame, onto another first classifying element of another frame. In fact the oilseed meal passing through the one classifying element or passing through the last classifying element of the multiple classifying elements of the preceding frame is applied on the first classifying element of the subsequent frame.

Alternatively, the oilseed meal that is remaining on the classifying element or remaining on multiple classifying elements of the preceding frame is placed onto the first classifying element of the subsequent frame. Increasing the residence time and/or increasing the surface can be achieved by re-placing oilseed meal remaining on the classifying elements of the preceding frame onto the first classifying element of the subsequent frame.

It further relates to the process wherein the another frame is comprising one or more classifying elements in the form of screen cloths, wires, or bars and wherein the classifying elements have rectangular holes, and wherein the frame including the first classifying element is shaking, oscillating, vibrating or tumbling, or wherein the classifying element is oscillating, or vibrating within the frame.

Furthermore, it relates to the process wherein the another first classifying element is inclined downwards in the frame in an angle of from 5° to 45° from horizontal position, preferably from 10° to 40° from horizontal position.

In yet another aspect of the invention, it relates to the process that comprises the following steps:
a) Placing the original oilseed meal resulting from the extraction of oil onto the first classifying element of the first frame,
b) Further sieving the oilseed meal coming through the first classifying element by applying another classifying element,
c) Optionally repeating step b), preferably once, preferably twice or more preferably three times,
d) Collecting the oilseed meal coming through as the oilseed meal with enriched content of proteins,
e) Placing the collected oilseed meal onto the first classifying element of another frame, characterized in that the first frame and the another frame are a frame comprising 2 to 6 superimposed classifying elements each inclined downwards in the frame in an angle from 5 to 45° from horizontal position and the classifying element is inclined in an angle of from -5° to 20° related to the previous classifying element in the frame, while the classifying elements are vibrating or oscillating, preferably vibrating.

In yet another aspect of the invention, it relates to the process that comprises the following steps:
a) Placing the original oilseed meal resulting from the extraction of oil onto the first classifying element of the first frame,
b) Further sieving the oilseed meal coming through the first classifying element by applying another classifying element wherein the holes are in surface smaller than the surface of the holes of the classifying element applied in the preceding step,
c) Optionally repeating step b), preferably once, preferably twice or more preferably three times,
d) Collecting the oilseed meal coming through as the oilseed meal with enriched content of proteins,
e) Placing the collected oilseed meal onto the first classifying element of another frame, characterized in that the first frame and the another frame are a frame comprising 2 to 6 superimposed classifying elements each inclined downwards in the frame in an angle from 5 to 45° from horizontal position and the classifying element is inclined in an angle of from -5° to 20° related to the previous classifying element in the frame, while the classifying elements are vibrating or oscillating, preferably vibrating.

More preferably the classifying element of the first frame is vibrating and the classifying element of the another frame is oscillating. This applies for each of the classifying elements in each of the frames.

In a typical set-up the original oilseed meal is sieved onto a first frame comprising multiple classifying elements and wherein the frame (including the classifying elements) is vibrating. Typically such a frame is comprising 2 to 6 superimposed classifying elements. The obtained (collected) oilseed meal from the first frame is then applied onto a second frame comprising multiple classifying elements wherein the classifying elements are oscillating. In yet another typical set-up the classifying element in the first frame is inclined downwards with an angle between 17-30°, preferably angles of 21°, 23°, 25° or 26° are applied, and the another classifying element in the second frame wherein the frame is comprising 2 to 6 superimposed classifying elements, is inclined downwards with 32° plus, minus 2°. In yet a further typical set-up the oilseed meal remaining on the another classifying elements of the second frame is re-applied on a third frame which is similar to the second frame in order to increase residence time and/or surface.

The current invention further relates to the process wherein the products remaining on the classifying elements of step a) to c) are collected together as oilseed meal.

The process of the current invention allows preparing an oilseed with enriched content of proteins and the products remaining on the classifying elements is collected as oilseed meal having potentially the same or similar applications as the original oilseed meal. This is in particular the case when the oilseed meal is rapeseed meal.

The oilseed meal collected as the remaining product on the classifying elements can be used as animal feed for poultry, pigs or ruminants.

Furthermore, the invention relates to the use of a frame or multiple frames each with one or multiple classifying elements in the form of screen cloths, wires, or bars and wherein the classifying elements have rectangular holes and wherein the frame including the first classifying element is shaking, oscillating, vibrating or tumbling, or wherein the classifying element is oscillating, or vibrating within the frame, for enriching the protein content in oilseed meal with at least 3% or from 4% up to 12% in comparison with original oilseed meal. In this use, the classifying element is inclined downwards in an angle of from 5° to 45° from horizontal position, preferably from 10° to 40° from horizontal position.

More in particular, the current invention relates to the use of a frame containing one or multiple shaking, oscillating, vibrating or tumbling, classifying elements in the form of screen cloths, wires, or bars and wherein the classifying elements have rectangular holes for enriching the protein content in oilseed meal with at least 3%, preferably from 4% up to 12% in comparison with original oilseed meal.

The advantages of the current inventions are amongst others the fact that two distinct fractions of oilseed meal, in particular rapeseed meal, with interesting properties are obtained. Both fractions can be applied in animal feed.

The process of the current invention is in particular suitable to sieve sticky oilseed meal with poor flowability. The set-up of the frame and/or classifying element improves the flow of the particles of the oilseed meal, in particular of the rapeseed meal. The set-up allows to avoid plugging and/or fouling of the classifying elements.

Furthermore, the use of multiple classifying elements and/or multiple frames with one or multiple classifying elements improves the performance of each of the classifying elements. The effective load of oilseed meal onto the classifying elements with holes having a small surface can be reduced and the wear or breakage of the classifying element can be reduced as well.

Appropriate characteristics of the holes of the classifying element are the pores opening surface of the cut-off classifying element (screen) being in the range 0.02mm² to 1mm², preferably 0.08mm² to 0.48mm² depending on the material and the ratio of the dimensions of the rectangular opening.

The percentage of protein is expressed % as is, not on dry base. The increase of the protein is likewise expressed on material as is.

The invention will hereunder be illustrated in following examples.

### Examples

Original rapeseed meal (Cargill, having 34.13 % protein), is sieved by applying a 4 deck sizer (4 classifying elements) Mogensen type SC 0546 with a width of 0.5 m and length 2.3m followed by a 3 deck fine sizer (3 classifying elements) Mogensen Type SIZER 2000 NC0524 with a length of 2.4m and a width of 0.5m. The material not passing through the classifying element screen of 0.315mm x 0.9mm was passed again on the fine sizer. The results in Table 1 show the consolidated yields after the second pass on the fine sizer.

**Table 1: Results of pilot plant trials.**

| TRIAL Mogensen equipment | Yield: 11,35% | | |
|---|---|---|---|
| 4 DECKS SIZER + 3 DECKS FINE SIZER | | | |
| | | | |

| Screen / Machine rectangular dimensions. | FRACTION (yield) % | PROTEIN % as is | COMBINED PRO* % as is |
|---|---|---|---|
| Fine Sizer 0.25 mm x 0.75 mm | 6.31 | 41.7 | 39.61 |
| Fine Sizer 0.315 mm x 0.9 mm | 5.05 | 37.0 | |
| Fine Sizer 0.5 mm x 1.5 mm | 9.73 | 33.3 | 33.43 |
| Coarse sizer 0.63 x 2.0 mm | 7.39 | 31.8 | |
| Coarse sizer 0.9 x 2.7 mm | 16.1 | 32.9 | |
| Coarse sizer 1.4 x 40 mm | 28.66 | 33.2 | |
| Coarse sizer 3 x 130 mm | 12.03 | 34.6 | |
| - | 14.72 | 34.4 | |
| FEEED MATERIAL | 100 | 34.13 | 34.13 |

| | | | |
|---|---|---|---|
| PRO* = protein. | | | |

The machine used for the pre-screening step (is coarse sizer) was equipped with classifying elements having rectangular holes with dimensions indicated in the first column of Table 1 and with the following downwards angles from horizontal going from coarse to fine:
21°
23°
25°
26°

The fine fraction below 0.5 x 1.5mm of this first step had a yield of 28.48% of the overall input and was directed toward the second machine for fine sizing.
The machine used for the fine screening step (fine sizer) was equipped with classifying elements having rectangular holes with dimensions indicated in Table 1 and with equal downwards angles for each of the classifying element from horizontal at 32°.

The feed rate is 6.71 MT/hr for the coarse sizer and 1.83 MT/hr for the fine sizer.

The rapeseed meal with enriched protein content is the fraction passing through the classifying element (screen) 0.315 x 0.9mm. Therefore, in this particular set-up it is the sum of the product passing through the classifying element 0.25 mm x 0.75 mm and the product passing through the classifying element (screen) 0.315 x 0.9mm. The product yield of the rapeseed meal with enriched protein content is 11.35%.

The rapeseed meal with enriched protein content contains 39.61% proteins and the protein increase was 5.48% compared to the feed material (original rapeseed meal).

The remainder of the rapeseed meal is containing 33.44% of proteins.

The sieving test showed excellent flowability of the material over the screen due to the inclination / slope of the classifying element (screen). No plugging and fouling were experienced. The multi-screen arrangement (= multiple classifying elements) also improves the performance of the screens (classifying elements) by reducing the load to the finer ones thus reducing wear and likelihood of breakage.

## Claims

1. A process for preparing an oilseed meal with enriched content of proteins by sieving original oilseed meal resulting from the extraction of oil, **characterized in that** the sieving is using a first frame with first classifying element in the form of screen cloths, wires, or bars and wherein the classifying elements have rectangular holes, and wherein the frame including the first classifying element is shaking, oscillating, vibrating or tumbling, or wherein the classifying element is oscillating, or vibrating within the frame, wherein the holes of the classifying element is **characterized by** two distinct or different dimensions, preferably length and width, and wherein the classifying element is inclined downwards in the frame in an angle of from 5° to 45° from horizontal position, preferably from 10° to 40° from horizontal position.

2. The process according to anyone of claims 1 and the process is comprising the following steps:
a) Placing the original oilseed meal resulting from the extraction of oil onto the first classifying element of the first frame,
b) Further sieving the oilseed meal coming through the first classifying element by applying another classifying element wherein the holes are in surface smaller than the surface of the holes of the classifying element applied in the preceding step,
c) Optionally repeating step b), preferably once, preferably twice or more preferably three times,
d) Collecting the oilseed meal coming through as the oilseed meal with enriched content of proteins.

3. The process according to claim 2 wherein the another classifying element of step b) or optionally from step c) is inclined in an angle of from -5° to 20° related to the first classifying element.

4. The process according to anyone of claims 1 to 3 wherein the oilseed is selected from the group consisting of rapeseed, sunflower, and mixtures thereof, preferably rapeseed.

5. The process according to anyone of claims 1 to 4 wherein the process further comprises sieving the oilseed meal onto another first classifying element of another frame.

6. The process according to claim 5 wherein the another frame is comprising one or more classifying elements in the form of screen cloths, wires, or bars and wherein the classifying elements have rectangular holes, and wherein the frame including the first classifying element is shaking, oscillating, vibrating or tumbling, or wherein the classifying element is oscillating, or vibrating within the frame.

7. The process according to claim 5 or6 wherein the another first classifying element is inclined downwards in the frame in an angle of from 5° to 45° from horizontal position, preferably from 10° to 40° from horizontal position.

8. The process according to anyone of claims 1 to 7 wherein the products remaining on the classifying elements of step a) to c) are collected together as oilseed meal.

9. Use of a frame containing one or multiple shaking, oscillating, vibrating or tumbling, classifying elements in the form of screen cloths, wires, or bars and wherein the classifying elements have rectangular holes for enriching the protein content in oilseed meal with at least 3%, preferably from 4% up to 12% in comparison with original oilseed meal, and wherein the holes of the classifying element is **characterized by** two distinct or different dimensions, preferably length and width, and wherein the classifying element is inclined downwards in the frame in an angle of from 5° to 45° from horizontal position, preferably from 10° to 40° from horizontal position.

## Patentansprüche

1. Verfahren zum Herstellen eines Ölsaatenmehls, das mit einem Gehalt an Proteinen angereichert ist, durch Sieben eines ursprünglichen, aus der Extraktion von Öl gewonnenen Ölsaatenmehls, **dadurch gekennzeichnet, dass** das Sieben einen ersten Rahmen mit einem ersten Klassifizierungselement in der Form von Siebgeweben, Drähten oder Stäben verwendet und wobei die Klassifizierungselemente rechteckige Löcher aufweisen, und wobei der Rahmen, der das erste Klassifizierungselement beinhaltet, geschüttelt, geschwenkt, gerüttelt oder gestürzt wird, oder wobei das Klassifizierungselement im Rahmen geschwenkt oder gerüttelt wird, wobei die Löcher des Klassifizierungselements durch zwei verschiedene oder unterschiedliche Dimensionen gekennzeichnet sind, vorzugsweise Länge und Breite, und wobei das Klassifizierungselement nach unten im Rahmen in einem Winkel von 5° bis 45° zu der horizontalen Position geneigt ist, vorzugsweise von 10° bis 40° zu der horizontalen Position.

2. Verfahren nach einem der Ansprüche 1 und Verfahren, das die folgenden Schritte umfasst:
a) Platzieren des ursprünglichen Ölsaatenmehls, das aus der Extraktion von Öl gewonnen wird, auf das erste Klassifizierungselement des ersten Rahmens,
b) weiteres Sieben des Ölsaatenmehls, das durch das erste Klassifizierungselement läuft, durch Anwenden eines anderen Klassifizierungselements, wobei die Löcher eine kleinere Oberfläche aufweisen als die Oberfläche der Löcher des Klassifizierungselements, das im vorangegangen Schritt angewendet wurde,
c) wahlweise Wiederholen von Schritt b), vorzugsweise einmal, vorzugsweise zweimal oder bevorzugter dreimal,
d) Auffangen des durchlaufenden Ölsaatenmehls als das mit einem Gehalt an Proteinen angereichertes Ölsaatenmehl.

3. Verfahren nach Anspruch 2, wobei das andere Klassifizierungselement von Schritt b) oder wahlweise von Schritt c) in einem Winkel von -5° bis 20° in Bezug auf das erste Klassifizierungselement geneigt ist.

4. Verfahren nach einem der Ansprüche 1 bis 3, wobei die Ölsaat ausgewählt ist aus der Gruppe bestehend aus Raps, Sonnenblume und Gemischen davon, vorzugsweise Raps.

5. Verfahren nach einem der Ansprüche 1 bis 4, wobei das Verfahren weiter Sieben des Ölsaatenmehls auf ein anderes Klassifizierungselement eines anderen Rahmens umfasst.

6. Verfahren nach Anspruch 5, wobei der andere Rahmen ein oder mehrere Klassifizierungselemente in der Form von Siebgeweben, Drähten oder Stäben umfasst und wobei die Klassifizierungselemente rechteckige Löcher aufweisen, und wobei der Rahmen, der das erste Klassifizierungselement beinhaltet, geschüttelt, geschwenkt, gerüttelt oder gestürzt wird, oder wobei das Klassifizierungselement im Rahmen geschwenkt oder gerüttelt wird.

7. Verfahren nach Anspruch 5 oder 6, wobei das andere Klassifizierungselement nach unten im Rahmen in einem Winkel von 5° bis 45° zu der horizontalen Position geneigt ist, vorzugsweise von 10° bis 40° zu der horizontalen Position.

8. Verfahren nach einem der Ansprüche 1 bis 7, wobei die Produkte, die auf dem Klassifizierungselement von Schritt a) bis c) verbleiben, zusammen als Ölsaat aufgefangen werden.

9. Verwendung eines Rahmens, der ein oder mehrere Klassifizierungselemente in der Form von Siebgeweben, Drähten oder Stäben enthält, die geschüttelt, geschwenkt, gerüttelt oder gestürzt werden, und wobei die Klassifizierungselemente rechteckige Löcher aufweisen, zum Anreichern des Proteingehalts in Ölsaatenmehl mit mindestens 3%, vorzugsweise 4% bis zu 12% im Vergleich zu ursprünglichem Ölsaatenmehl, und wobei die Löcher des Klassifizierungselements durch zwei verschiedene oder unterschiedliche Dimensionen gekennzeichnet sind, vorzugsweise Länge und Breite, und wobei das Klassifizierungselement nach unten im Rahmen in einem Winkel von 5° bis 45° zu der horizontalen Position geneigt ist, vorzugsweise von 10° bis 40° zu der horizontalen Position.

## Revendications

1. Procédé de préparation d'une farine de graines oléagineuses ayant une teneur améliorée en protéines par tamisage d'une farine de graines oléagineuses originale résultant de l'extraction d'huile, **caractérisé en ce que** le tamisage utilise un premier cadre ayant un premier élément de tri sous la forme de toiles, grilles ou barreaux de criblage et dans lequel les éléments de tri ont des trous rectangulaires, et dans lequel le cadre incluant le premier élément de tri présente des secousses, oscillations, vibrations ou culbutes, ou dans lequel l'élément de tri présente des oscillations ou vibrations à l'intérieur du cadre, dans lequel les trous de l'élément de tri sont **caractérisés par** deux dimensions distinctes ou différentes, de préférence en longueur et en largeur, et dans lequel l'élément de tri est incliné vers le bas, dans le cadre à un angle de 5° à 45° par rapport à la position horizontale, de préférence de 10° à 40° par rapport à la position horizontale.

2. Procédé selon la revendication 1, le procédé comprenant les étapes suivantes :
a) mise en place de la farine de graines oléagineuses originale résultant de l'extraction d'huile sur le premier élément de tri du premier cadre,
b) ensuite, tamisage de la farine de graines oléagineuses passant à travers le premier élément de tri par application d'un autre élément de tri dans lequel les trous sont en surface plus petits que la surface des trous de l'élément de tri appliqué dans l'étape précédente,
c) répétition éventuelle de l'étape b), de préférence une fois, de préférence deux fois ou de préférence trois fois,
d) collecte de la farine de graines oléagineuses étant passée à travers en tant que farine de graines oléagineuses présentant une teneur améliorée en protéines.

3. Procédé selon la revendication 2, dans lequel l'autre élément de tri de l'étape b) ou éventuellement de l'étape c) est incliné à un angle de -5° à 20° par rapport au premier élément de tri.

4. Procédé selon l'une quelconque des revendications 1 à 3, dans lequel la farine de graines oléagineuses est choisie dans le groupe constituée de colza, de tournesol et de mélanges de ceux-ci, de préférence, de colza.

5. Procédé selon l'une quelconque des revendications 1 à 4, dans lequel le procédé comprend en outre le tamisage de la farine de graines oléagineuses sur un autre premier élément de tri d'un autre cadre.

6. Procédé selon la revendication 5, dans lequel l'autre cadre comprend un ou plusieurs éléments de tri sous la forme de toiles, de grilles ou de barreaux de criblage et dans lequel les éléments de tri ont des trous rectangulaires, et dans lequel le cadre incluant le premier élément de tri présente des secousses, oscillations, vibrations ou culbutes, ou dans lequel l'élément de tri présente des oscillations ou vibrations à l'intérieur du cadre.

7. Procédé selon la revendication 5 ou 6, dans lequel l'autre premier élément de tri est incliné vers le bas dans le cadre à un angle de 5° à 45° par rapport à la position horizontale, de préférence de 10° à 40° par rapport à la position horizontale.

8. Procédé selon l'une quelconque des revendications 1 à 7, dans lequel les produits restants sur les éléments de tri des étapes a) à c) sont collectés ensemble en tant que farine de graines oléagineuses.

9. Utilisation d'un cadre contenant un ou de multiples éléments de tri produisant des secousses, oscillations, vibrations ou tremblements sous la forme de toiles, grilles ou barreaux de criblage et dans laquelle les éléments de tri ont des trous rectangulaires pour améliorer la teneur en protéines dans la farine de graines oléagineuses d'au moins 3 %, de préférence de 4 % jusqu'à 12 % par rapport à la farine de graines oléagineuses originale, et dans laquelle les trous de l'élément de tri sont **caractérisés par** deux dimensions distinctes ou différentes, de préférence en longueur et en largeur, et dans laquelle l'élément de tri est incliné vers le bas dans le cadre à un angle de 5° à 45° par rapport à la position horizontale, de préférence de 10° à 40° par rapport à la position horizontale.
